# EUROPEAN PATENT APPLICATION

(11) **EP 4 550 775 A1**
(43) Date of publication of application: **07.05.2025**
(21) Application number: 23207968.1
(22) Date of filing: 06.11.2023
(51) Int. Cl.: H04N 17/00, H04N 23/60

(54) **METHOD FOR A MEDICAL IMAGING SYSTEM**

(71) Applicant: Koninklijke Philips N.V., 5656 AG Eindhoven (NL)
(72) Inventor: SENEGAS, Julien Thomas, Eindhoven (NL); KROENKE-HILLE, Sven, Eindhoven (NL); DESHPANDE, Hrishikesh Narayanrao, 5656 AG Eindhoven (NL); BYSTROV, Daniel, Eindhoven (NL); BERGTHOLDT, Martin, Eindhoven (NL); MENSER, Bernd, Eindhoven (NL)
(74) Representative: Philips Intellectual Property & Standards

(57) **Abstract**

The invention provides a computer-implemented method for a medical imaging system, the method comprising acquiring, by means of a video camera mounted on a component of a medical imaging device of the medical imaging system, a sequence of 2D images, moving the component of the medical imaging device such that at least two images of the sequence of 2D images are acquired at different positions, and processing the at least two images to determine 3D image information.

## Description

### FIELD OF THE INVENTION

The invention provides a computer-implemented method for a medical imaging system, a medical imaging system, a computer program product, and a computer readable medium.

### BACKGROUND OF THE INVENTION

In the context of medical imaging systems, such as X-ray imaging systems, depth information is useful for various purposes concerning different stages of the imaging procedure.

Such depth information may, for example, be obtained by 3D imaging devices such as depth cameras. However, there are drawback of using such imaging devices, for example, among others, their size and heat generation.

It is an object of the invention to provide accurate depth information while overcoming drawbacks of such 3D imaging devices.

### SUMMARY OF THE INVENTION

The invention provides a computer-implemented method for a medical imaging system, a medical imaging system, a computer program product, and a computer readable medium according to the independent claims. Preferred embodiments are laid down in the dependent claims.

The present disclosure provides a computer-implemented method for a medical imaging system, the method comprising acquiring, by means of a video camera mounted on a component of a medical imaging device of the medical imaging system, a sequence of 2D images, moving the component of the medical imaging device such that at least two images of the sequence of 2D images are acquired at different positions, and processing the at least two images to determine 3D image information.

In other words, at least one pair of images is acquired at different positions of the component. Accordingly the at least one pair of images is also acquired at different positions of the camera mounted on the component. The component is moved between the image-acquisitions. Thus, images from different perspectives are obtained. The images, together with the positions at which the images were captured, may be used for extracting 3D image information. The method can be easily incorporated in medical imaging systems and workflows, particularly the preparation phase thereof, during which the subject to be imaged, such as the patient, is positioned and/or the imaging geometry adapted, e.g., by adapting collimator settings and/or by adapting arrangement of components relative to each other and the subject. In the course of the adapting, components, such as the tube head of an X-ray imaging device, may be moved, generally along an at least partially predetermined path and/or a path that is tracked. With a video camera mounted on such a component, the retrieval of 3D image information from 2D image sequences can be easily onboarded, because the camera position at the time of image acquisition can be determined with relatively low additional effort, if any.

The claimed method, among others, allows to provide accurate depth information while overcoming drawbacks of 3D imaging devices.

Video cameras that are relatively cheap, widely available, small-size, and do not create excessive heat can be employed according to the present disclosure.

However, using such video cameras to obtain depth information has various challenges, particularly, when it comes to providing the required accuracy for depth determination and to meeting the unique challenges of a medical imaging system.

The method of the present disclosure allows for the use of such video cameras in a medical imaging system for obtaining 3D image information.

To that end, the video camera is mounted on a component of the medical imaging device of the medical imaging system. The components of the medical imaging device, such as the tube head or the detector, are configured to be moved along predetermined paths and/or along paths that can be (precisely) tracked. As such, a video camera mounted on such a component can be moved alongside the component on a similarly well-defined path. At the same time, the video camera can provide a series of images, each at a well-defined position due to the path being well-defined. Thus, depth information can be retrieved from the 2D images yielded by the video camera making use of the position.

Moreover, the components of the medical imaging device, such as tube head or detector, will generally be moved prior to imaging, for example for adjusting the settings of the imaging system to the subject and/or to the required Field of View, FoV. As such, when using a video camera mounted on such a component, the depth information can be obtained in the regular workflow of the medical imaging system. That is, no additional dedicated physical steps are required for obtaining depth information.

As one example, a height of the tube head will generally be adjusted prior to medical imaging. Alternatively or in addition, a distance between the tube head and the subject may be adjusted prior to medical imaging. To that end, the tube head will usually be moved along a predetermined path. When mounting the video camera on the tube head and capturing the sequence of 2D images while moving the tube head along the predetermined path, 3D image information can be provided without adding physical steps to the workflow.

The method of the present disclosure also allows for easily retrofitting a medical imaging system with 3D capabilities. That is, with the possible exception of mounting a video camera to the component, no physical changes or additions to the medical imaging system are required. Also the physical workflow of the medical imaging system does not have to be changed, such that control of the system prior to and during the medical imaging process can remain the same.

Thus, the above object can be met by the method of the present disclosure.

In the present disclosure, a medical imaging system may comprise a medical imaging device and optionally other devices, such as a patient bed.

In the present disclosure, a medical imaging device may comprise, for example, an X-ray imaging device. The X-ray imaging device may optionally be configured for CT imaging and/or for fluoroscopy imaging. The X-ray imaging device may be a C-arm device.

In the present disclosure, the component of the medical imaging device may comprise, for example, a source and/or a detector and/or an optical component like a shutter, and/or a support structure. The support structure may be a structure to which a source and/or a detector and/or an optical component is/are mounted and/or in which the source and/or detector and/or optical component is/are incorporated, such as a tube head or a C-arm.

When the medical imaging device is an X-ray imaging device, the component may, for example, be a shutter, an X-ray source, an X-ray detector, a tube head comprising the X-ray source, or a C-arm.

In the present disclosure, the term video camera may refer to a camera that has the capability to acquire video data. In video data, subsequent images are referred to as frames, each frame corresponding to a 2D image of sequence of 2D images. A video camera may also have the capability to capture non-video image data, e.g. single shots or serial shots.

In the present disclosure, the video camera position and orientation may be fixed relative to the component during acquiring the sequence of 2D images. In other words, the viewing direction of the video camera may be fixed relative to the component during acquiring the sequence of 2D images. It is to be understood that, if the component comprises parts that are movable with respect to each other, the viewing direction would then be fixed relative to the part of the component to which the video camera is mounted. When the component is moved, the video camera moves together with the component. Thus, the camera position and the video camera viewing direction will also move together with the component. On the other hand, movement relative to the component may not occur. This reduces computational complexity, as the camera coordinate system and component coordinate system do not change relative to each other over the course of acquiring the sequence of 2D images.

It may be possible to move the video camera relative to the component during acquiring the 2D images in a controlled manner. In this case, the method may entail moving the video camera in a predefined way and/or tracking the camera movement, e.g. rotating/pivoting the camera while keeping the position relative to the component the same. Based thereon, a computation accounting for any camera movement relative to the component may be carried out, e.g., to account for the camera coordinate system and component coordinate system moving with respect to each other.

In the present disclosure, the term sequence of 2D images may refer to a plurality of 2D images acquired successively. In other words, the 2D images of the sequence of 2D images may be acquired at different times. For example, the sequence of 2D images may comprise frames of a video (sequence) acquired by the video camera.

In the present disclosure, the at least two images may comprise some or all of the frames of a video sequence. The at least two images may be subsequent frames of the video sequence or may be every *N*th frame, where *N* may be selected according to the technical application at hand.

Particularly, the at least two images may comprise one or more image pairs, for example stereoscopic image pairs for a stereoscopic determination of the 3D image information. The two images of an image pair be subsequent images, such as subsequent frames, or images separated by a given number of frames and/or a given time of acquisition and/or a given distance that the component has moved.

According to the present disclosure, prior to determining 3D image information, if not all images of the acquired sequence of 2D images are to be used for determining the 3D image information, the method may comprise, particularly automatically, selecting the at least two images to be used for determining 3D image information from the acquired sequence of 2D images. As an example, the at least two images may be selected based on a time or number of frames elapsed between the acquisition of the images and/or based on the respective position at which the images are acquired.

In the present disclosure, 3D image information may entail depth information, particularly a depth map, and/or 3D coordinates, for example. This will be explained in more detail below.

According to the present disclosure, the moving may comprise moving the component along a predetermined path and/or along a path that is tracked.

The method may comprise moving the component along a predetermined path by automatically controlling a drive that is configured to move the component. It may also comprise moving the component at a predetermined speed. This means that the respective position of the component at a given time can be determined, particularly without making use of tracking. The path may optionally additionally be tracked. This may improve accuracy.

Tracking of the path may be used in scenarios where the component is not moved along a predetermined path or along a path that is only partially predetermined, and/or where the component is not moved at a predetermined speed. Particularly, this may be relevant for manually controlled movements.

Moving the component along a path that is tracked may comprise determining, at different positions along the path, the respective positions of the component, for example in 3D coordinates. This may be accomplished by tracking techniques known in the art. For example, the tracking techniques may make use of one or more markers and a detection device configured to detect the position of the markers, thereby allowing for determining a relative movement between the markers and the detection device. Moving the component along a path that is tracked allows for more flexibility compared to a predetermined path, while still providing the respective position.

The above allows for accurately determining at which respective positions of the component the 2D images of the sequence are acquired. This position, herein, is also referred to as imaging position of an image or as position associated with the image. The position of the component at which the respective image is acquired may be employed for determining the 3D image information.

While it is in principle possible to use the 2D images for position detection, the above feature allows for high accuracy while keeping the processing effort associated with processing the 2D images low. Moreover, the method may be onboarded on existing systems that will usually already have position tracking technology implemented on the component, e.g., for analysis of and/or reconstruction from the medical images.

According to the present disclosure, the moving may be carried out when adjusting an imaging geometry of the medical imaging system prior to imaging of a subject, e.g., when adjusting the imaging geometry to a subject size and/or when adjusting the source-to-image distance, SID, and/or when adjusting the height of the component.

The subject may be a person to be imaged, e.g. a patient. The person may be imaged in a sitting, standing, and/or lying position. Adjusting the imaging geometry may entail that the component is/comprises a component that determines the imaging geometry, such as an X-ray source and/or an X-ray detector and/or a tube head. Adjusting the imaging geometry may comprise moving the component relative to the subject. Particularly, adjusting the imaging geometry may comprise moving the component in a vertical direction or, in other words, adjusting the height of the component, for example, when the patient is upright during the imaging procedure, e.g. in a height direction of a patient. Alternatively or in addition, adjusting the imaging geometry may comprise moving the component in a horizontal direction, e.g., left-right-direction relative to the patient. Both provide very accurate depth information.

Alternatively or in addition, adjusting the imaging geometry may comprise moving the component in a direction towards or away from the subject or, in other words, moving the component so as to increase or decrease distance to the subject. Particularly, this allows for adjusting the imaging geometry to a patient size, which may require a different distance relative to the surface of the patient and/or might require a different distance to increase the field of view.

The above has the advantage that the determining of the 3D image information can be incorporated into the normal workflow of medical imaging, i.e., adjustment of imaging geometry. In other words, no additional movements are required. This means that the 3D image information can be efficiently obtained.

According to the present disclosure, the moving may comprise a displacement by a distance such that the at least two images are a stereoscopic image pair, in particular the stereoscopic image pair being an image pair suitable for a stereoscopic determination of the 3D image information.

The distance may be selected depending on the application, for example the expected distance to subject. Optionally, more than two images, e.g. more than two frames, may be used with different distances. This improves depth precision over a range of target distances to the subject.

Stereoscopy methods known in the art may be used to process the at least two images so as to determine the 3D image information. Stereoscopy yields 3D image information efficiently while also providing sufficient accuracy. Stereoscopically based methods may be carried out for exactly one image pair from the image sequence or for two or more image pairs from the image sequence. Particularly, such techniques may entail using several pairs of video frames.

Techniques other than stereoscopy may also be used for determination of the 3D image information. As an example, time-of-flight (TOF)-based techniques, triangulation-based techniques, or structured light-based techniques may be used.

Machine learning techniques may be employed for determining of the 3D image information.

An exemplary method for computing 3D information, particularly without computing a full depth map or disparity map may comprise, in each input image, e.g. input frame, detecting keypoints or landmarks using a trained AI model. Landmarks or keypoints may comprise, for example, body joints such as shoulders, elbows, knees, hips, or the like. For each landmark or keypoint, the pixel shift between the keypoint or landmark coordinates of the two images (e.g. frames) may be computed. This landmark or keypoint disparity may then be used to compute the landmark or keypoint depth.

According to the present disclosure, prior to acquiring the sequence of 2D images, a calibration procedure may be performed.

The calibration may be a calibration of coordinate systems.

Calibration as described allows for improved determination of 3D image information from two or more 2D images that are captured at different positions.

The calibration procedure according to the present disclosure may comprise determining intrinsic parameters of the video camera that allow mapping pixel coordinates in the 2D images and coordinates of points in the camera coordinate system. The camera coordinate system may be a 3D coordinate system associated with the video camera and may be selected in any suitable manner. For example, a viewing direction of the video camera may be selected as one of the axes spanning the coordinate system.

The calibration procedure according to the present disclosure may comprise determining extrinsic parameters of the video camera that allow mapping into a reference coordinate system of the component, particularly after determining intrinsic parameters as described above. That is a/the camera coordinate system of the video camera may not be the same as the reference coordinate system of the component. The video camera may be mounted on the component in such a manner that the mapping does not change when the component moves. Thus, initial calibration allows for a fast and easy mapping during the image processing. The reference coordinate system of the component may be selected in any suitable manner, e.g., selected suitably for the imaging geometry of the medical imaging device.

A mapping to the reference coordinate system is advantageous for several reasons. Since the component is part of the imaging device, this reference coordinate system will likely be used for multiple purposes, such as for the medical imaging itself, and will likely be determined in a rather precise manner to that end. Accordingly, onboarding is easy, as there can be a static calibration between video camera and component, whereas the movement may be accounted for by the already existing technology of the medical imaging system. In particular, where the component is the tube head or source and/or the detector, proper calibration will likely already be part of the existing technology of the medical imaging system. The present method can leverage this technology efficiently for the added purpose of 3D image information retrieval.

According to the present disclosure, prior to acquiring the sequence of 2D images, a/the calibration procedure may be performed. The calibration procedure may comprise calibrating the video camera with respect to a component of the medical imaging device, particularly with respect to the component on which it is mounted and/or another component. The above-described calibration steps may be used for such a calibration. The examples and advantages described above apply accordingly.

According to the present disclosure, the calibration procedure may comprise computing a position and orientation of the video camera with respect to a component, particularly a detector, of the medical imaging system, particularly making use of a computer-vision method.

As an example, the calibration may be done once at the manufacturing site or the installation of the system.

The intrinsic calibration (computation of focal length, optical center, distortion coefficients) may be done using a calibration pattern (checkerboard pattern for example) and by acquiring a plurality of frames with different orientations of the calibration pattern.

The extrinsic calibration can be done by using feature points, which positions in the reference coordinate system are known and are detected in the camera image. This can be again a calibration pattern that is placed at a pre-defined position with respect to the reference coordinate system. Alternatively or in addition, detectable features from the imaging device itself may be used, such as the corners of the X-ray detector cover.

The extrinsic calibration may be carried out automatically and, in particular, may be automatically carried out to check for and/or correct changes.

As an example, images acquired by the video camera depicting at least part of the component may be used as an input for the calibration. The component may comprise or have attached thereto physical and/or optical features that support calibration by means of imaging said features.

As briefly mentioned above, according to the present disclosure, the calibration procedure may comprise use of a fixed reference pattern, also referred to as a calibration pattern, such as a QR code or chessboard pattern or the like. The calibration pattern may be placed at a predetermined known position, e.g. of the imaging device, and in the field of view of the camera. Particularly, such a procedure may be used in the above-described intrinsic parameter determination of the video camera.

Using the above-described optical features and/or a reference pattern allows for relatively easy, yet still precise calibration.

According to the present disclosure, acquisition of the at least two images may be manually triggered and/or automatically triggered, respectively, in particular in response to the component having moved a predetermined distance.

This may entail that the acquisition of both of the at least two images is manually triggered or that the acquisition of one of the at least two images is manually triggered and acquisition of the other of the at least two images automatically triggered. If at least the second (i.e., acquired after the first) of the at least two images is automatically triggered, the trigger condition for acquiring the second of the two images may be that the component has moved a predetermined distance from the position where the first of the two images was acquired, for example.

As an example, the predetermined distance may be retrieved from a memory, optionally having been received from a user input, and/or obtained by a calculation indicating the distance required for the technique to be applied for determining the 3D image information, e.g., by a given computer vision method to be used. As one example, the distance may be a minimum distance between positions of an image pair that is adequate for a stereoscopic method.

A manual triggering may be carried out using a remote control and/or a user interface of a computing device, for example. An automatic triggering may be caused by a trigger signal generated by a processor based at least on measured data and/or control data, e.g. measurement and/or control data representative of the movement of the component.

Where video data from the video camera is used for determining the 3D image information, no specific triggering of the two images may be required, as they may be part of the sequence of video frames. In this case, start and/or end of the video sequence may be triggered, particularly in such a manner that the video sequence comprises two images meeting the requirements for 3D image information determination.

Suitable triggering of the image/video acquisition ensures higher quality of the 3D image information retrieved from the at least two images.

According to the present disclosure, a first image of the at least two images may be acquired prior to a second image of the at least two images and acquisition of the first image and optionally the second image may be automatically triggered. In particular, the acquisition of the first image may be triggered based on the subject being in a target position.

The target position may be the position wherein the subject is to be imaged by the medical imaging device. The target position and/or criteria for determining that a subject is in the target position may be stored in and retrieved from a memory and/or entered by a user. The subject being in a target position may be determined, for example, based on a machine learning, e.g. deep learning, algorithm applied to analyze the video images and detect the presence of a person or of selected body parts (joints, face, etc.). For example, the output may be a bounding box, e.g. around the person. The subject being in a target position may entail that the subject is within a tolerance interval around and including the target position. A confirmation by the user may also be used to determine that the subject is in a target position.

Triggering the first image acquisition when the subject is in the target position ensures that 3D image information is meaningful for the medical imaging procedure, such as providing proper information on a distance from a subject during the imaging. If acquired prior to the subject being in the target position, any 3D image information may potentially later not be correct anymore, which in turn may lead to quality issues.

According to the present disclosure, determining the 3D image information may comprise retrieving depth information, particularly computing a depth map and/or obtaining 3D coordinates.

Depth information may be information indicative of a distance of a point in the image to the video camera. A depth map may reflect the distances at several points in the image to the video camera, in other words, may reflect a per-pixel distance. 3D coordinates may be coordinates of points in the image in the camera coordinate system and, particularly, may be derived from the/a depth map. Said 3D coordinates in the camera coordinate system can be mapped to 3D coordinates in the reference coordinate system of the component and the 3D image information may comprise said 3D coordinates in the reference coordinate system. In this case, the method may comprise prior calibration of the reference coordinate systems and the camera coordinate system, in the manner explained above. This allows for precise and efficient mapping.

Methods for retrieving depth information, such as depth map and/or 3D coordinates from two or more 2D images are known in the art, particularly in computer vision, and any suitable methods thereof may be employed.

Retrieving depth information may be carried out using a machine learning, particularly a deep learning, method, such as a convolution neural network, that takes the at least two images as an input.

According to the present disclosure, determining the 3D image information may comprise calculating pixel shift induced by the motion of the component. In particular, it may comprise calculating, for each pixel or for selected pixels, the pixel shift induced by the motion of the component. For example, the selected pixels may correspond to keypoints automatically determined by an algorithm, such as AI and/or image processing algorithm.

According to the present disclosure, determining the 3D image information may comprise computing a depth map using a stereoscopic method. In particular, retrieving 3D image information may comprise computing a disparity map from the at least two images and computing 3D coordinates and/or a depth map from the disparity map. According to the present disclosure, determining the 3D image information may comprise at least partially reconstructing a 3D surface of the subject from the sequence of 2D images and system parameters describing the movement of the component.

Disparity maps may be obtained by known computer vision methods, such as cross correlation or optical flow.

Disparity and distance from the video camera are inversely related. Accordingly, depth information can be retrieved and optionally the points in a pair of 2D images can be mapped as coordinates in 3D space.

The at least two images may be a stereoscopic image pair or, in other words, a pair of images to be used as input for a stereoscopic method. The method of the present disclosure may comprise selecting an image pair acquired at a distance from each other that is within a predetermined range of distances, the range of distances optionally being dependent on an expected distance from the subject at the time of image acquisition of one of said images, as outlined above.

Stereoscopic methods are easy to incorporate in the workflow of medical imaging or preparation for the medical imaging, while also being efficient and yielding good accuracy.

According to the present disclosure, determining the 3D image information may comprise processing the images of a video sequence to obtain a single depth map or a plurality of depth maps, particularly, wherein the video sequence is obtained from a continuum of camera positions, such as when displacing the component.

An advantage of using a plurality of frames acquired during the movement of the component is that the camera will see the patient from a plurality of perspectives. This also allows reconstructing a more complete 3D surface of the patients. As an example, when reconstructing a 3D surface from only one set of stereo images, the surface will contain "holes" as some parts of the patient will not be seen from the used camera perspectives. This is circumvented when using a plurality of camera positions. Techniques for using image frames for reconstructing the 3D surface are also know from and referred to in the art as "fusion" or real-timed dense surface mapping.

As an example, a video sequence comprises a plurality of frames. The at least two images may be frames of the video sequence. Some or all of the frames of the video sequence may be comprised in the at least two images and used for determining 3D image information. As an example each frame or every *Nth* frame may be used for determining 3D image information. *N* may depend, for example, on the 3D image information determination method and/or accuracy. The at least two images may comprise multiple pairs of frames, e.g. pairs of subsequent frames.

A continuum of camera positions may, in the present disclosure, refer to the video sequence being captured without interruption while the video camera moves through a continuum of positions. It is to be understood that based on the frame rate of the video sequence, this will nonetheless yield images from discrete positions.

Using a video sequence and using frames from the video sequence is advantageous, as it provides a large dataset having a well-defined structure, particularly in terms of timing of image acquisition. As an example, knowing the frame rate, as well as the movement path and speed of the component, allows for rather precise prediction for a position of all subsequent images due to the precisely defined times. Moreover, in case some of the images are not particularly suitable for determining 3D image information (for example in case of obstruction of a relevant structure or the like), additional images will still be available from the plurality of frames, which may be used for improving the result.

According to the present disclosure, a position of the component may be recorded during acquisition of the sequence of 2D images, particularly during video frame acquisition.
Recording the position of the component may entail tracking methods and/or may entail recording the position based on a predetermined movement path, including position and/or time, along which the component is automatically moved. Such recording, as already explained above, allows for easy determination of the camera position at the time of image acquisition of the at least two images and, hence, improved 3D image reconstruction. Particularly, as also explained above, recording the position of the component will often be a technology already implemented in medical imaging systems. Thus, the feature allows for easy onboarding and incorporation of the method in existing systems.

According to the present disclosure, the component may be moved by means of a drive, particularly a motor, wherein the drive is automatically controlled and/or remote controlled.

Moving the component by means of a drive allows for improved control and/or monitoring of the position of the component and, accordingly, position of image acquisition, which in turn may improve quality of the 3D image information.

According to the present disclosure, the moving of the component may comprise movement in a vertical direction and/or a horizontal direction and/or a rotation of the component and/or a tilt of the component.

A movement in a vertical direction and a horizontal direction may be a movement where the vertical and horizontal movement are carried out sequentially or at the same time. The latter may be referred to as an oblique movement. Where the component has a top view or bottom view viewing direction with respect to the subject, the vertical movement may be part of the adjusting of the imaging geometry to the subject, e.g., by moving the component towards or away from the subject. This is similarly the case for a horizontal movement if the component has a side view viewing direction of the subject. A lateral movement relative to the subject, such as a horizontal movement for a top or bottom view or a vertical movement for a side view, may be particularly useful for stereoscopic methods.

According to the present disclosure, a single video camera may be used for acquiring the sequence of 2D images. While in principle images from two cameras attached to the component may be used, use of a single camera greatly simplifies hardware integration and reduces the costs.

According to the present disclosure, the sequence of images may comprise color images, monochrome images, and/or infrared (IR) images. The selection of images will depend on the technical application at hand, particularly matching the configuration of the medical imaging system or workflow and/or matching the image processing technique envisaged for determining the 3D image information.

According to the present disclosure, the method may comprise using the 3D image information for at least one of:
adjusting collimator settings, particularly computing a collimation window for automated collimation of the medical imaging system,
computing a detector position, particularly a height, of a detector of the medical imaging device, particularly adjusting height of the detector,
computing the distances and angles between different body parts of the subject, and adapting the geometry of the medical imaging system accordingly,
positioning guidance for positioning a subject relative to the medical imaging system,
automatically adjusting rotation and/or tilt angles of the tube head,
computing a breath signal of a subject,
computing a motion signal of a subject,
computing biometrics of a subject or of a body part of a subject, such as height, width, volume, weight, circumference,
computing the body type of a subject, such as children, adult, or small, medium, large sized,
computing the X-ray dose-relevant parameters such as voltage and current as a result of the patient biometrics.

Collimator settings may be selected so as to provide a proper beam shape and/or field of view, FOV, as required by a given application. The settings to obtain the proper beam shape and/or FOV may depend on the distance of the source to the subject. 3D image information may be used for determining the actual distance, particularly, so as to adjust the distance to match a target distance.

Selecting detector position making use of the 3D image information allows for improved positioning of the detector and, accordingly, improved medical image quality.

This similarly applies to positioning a subject relative to the medical imaging system. In addition, proper positioning allows for proper imaging of the region of interest, in addition to improved medical image quality.

This similarly applies to adjusting rotation and/or tilt angles of the tube head,

Computing a breath signal of a subject allows for improved gating during some applications of the medical imaging procedure. Moreover, it allows for correcting any imaging artefacts due to the movement brought about by breathing.

This similarly applies to computing a motion signal of a subject.

Computing biometrics of a subject or of a body part of a subject, such as height, width, volume, weight, circumference, allows for selecting proper settings, such as imaging geometry and/or dosage of contrast agents. Moreover, it may allow for adjusting dose of the medical imaging modality to the size of the patient.

The present disclosure also provides a medical imaging system comprising a medical imaging device and a video camera, wherein the medical imaging system is configured to carry out the method of the present disclosure, particularly as outlined above and as claimed.

The video camera may be configured to capture the above-identified sequence of 2D images, particularly a video sequence having a plurality of frames and at least one, particularly multiple or all of the at least two 2D images being frames of the video sequence. The video camera may also be configured to store timestamps with one or more of the captured images. The video camera may be configured such that a frame rate of a video sequence is set and/or stored with the video sequence.

The medical imaging system may comprise a medical imaging device, such as X-ray, particularly CT, imaging device and/or MRT imaging device. The medical imaging system may comprise a C-arm system. The medical imaging system may be a medical imaging system for contrast medical imaging. The medical imaging system may comprise a computing system configured to carry out some or all of the computational steps of the method. The computational steps may be carried out centrally or distributed over different devices of the imaging system. The distribution of a different devices may be referred to as a distributed method. For example, in a distributed method, some of the computational steps may be carried out by the video camera and some of the computational steps may be carried out by a computing device being part of or associated with the medical imaging device and/or a tracking device. As an example, all at least some or all of the computational steps of the present disclosure may be carried out remotely, in particular may be carried out via cloud technology.

According to the present disclosure, the video camera may be mounted on a component of the medical imaging device in such a manner that the relative arrangement of the video camera and the component is fixed. This may include incorporating the video camera into the component, such as in a common housing, or releasably attaching the video camera to the component, such as by screwing, clicking or other releasable attachment mechanisms. The fixed arrangement may be temporarily fixed, particularly for the duration of the method. That is, the video camera may be mounted in such a manner that it can be fixed in different positions and/or orientations.

For example, the video camera may be configured to capture color images and/or infrared images and/or black-and-white images and/or grey scale images. Other camera types are also conceivable.

According to the present disclosure, the medical imaging device may be configured such that the component is movable, particularly automatically movable, by a drive, particularly a motor.

In particular, the drive may be configured to be controlled by a controller of the medical imaging system, particularly controlled so as to move the component along a predetermined path.

The component being movable relates to the component being movable relative to other components of the medical imaging device, particularly movable with respect to components of the medical imaging device that remain stationary at least during the method.

According to the present disclosure, the medical imaging device may be configured such that the component is automatically movable along a predetermined path. To that end, a motor may be configured to move the component along the predetermined path. The medical imaging device may be configured to comprise guide elements, such as rails and/or limit stops and/or may be articulated components having limited movement range, thereby allowing for controlling the path of the movement at least in part mechanically.

According to the present disclosure, the medical imaging device may be an X-ray imaging device having a tube head and a detector, and the component may be the tube head or the detector. The tube head may comprise an X-ray source and optionally a/the collimator.

According to the present disclosure, the medical imaging device may be an X-ray imaging device having a tube head and a detector, wherein the video camera may be a first video camera and the medical imaging system may comprise a second video camera, and wherein the first video camera may be mounted on the tube head and the second video camera may be mounted on the detector or on another component of the medical imaging device.

This has the further advantage that the subject, e.g. patient, may be seen simultaneously from two different, complementary perspectives. For example, in the described case, the subject, e.g. patient, is seen from the back and the front side.

The method may be carried out independently for multiple cameras, for example, for a camera mounted on a detector and a camera mounted on a source, at least one of the cameras being the above-described video camera. One of these cameras may be seen as an auxiliary camera. For example, a video camera mounted on a source or tube head may be a main camera and a camera mounted on a detector may be an auxiliary camera. The auxiliary camera may, for example, allow for providing even more detailed image information. It may be selectively activated where deemed advantageous for a given technical or imaging application.

Alternatively, the image data of two or more cameras of the medical imaging system, mounted on the same or different components, may be employed collectively for determining the 3D image information. As an example, the second camera may provide 3D information about body parts that are occluded in the first camera frames.

The present disclosure also provides a computer program product comprising computer-readable instructions which, when executed by a computer, cause the computer to carry out and/or control the method of the present disclosure, particularly as outlined above and as claimed.

The present disclosure also provides a computer-readable medium having stored thereon computer-readable instructions which, when executed by a computer, cause the computer to carry out and/or control the method of the present disclosure, particularly as outlined above and as claimed.

The features and advantages outlined in the context of the method similarly apply to the system, computer program product, and computer-readable medium.

### BRIEF DESCRIPTION OF THE DRAWINGS

Fig 1 illustrates a method for a medical imaging system according to the present disclosure,
Fig. 2 illustrates a schematic, not to scale view of a medical imaging system according to the present disclosure.
Fig. 3 illustrates a schematic, not to scale view of an example showing the component of the imaging device according to the present disclosure at two exemplary different positions.
Fig. 4 illustrates a schematic, not to scale view of another example showing the component of the imaging device according to the present disclosure at two exemplary different positions.
Fig. 5 illustrates a schematic, not to scale view of another example showing the component of the imaging device according to the present disclosure at two exemplary different positions.

### DETAILED DESCRIPTION OF EMBODIMENTS

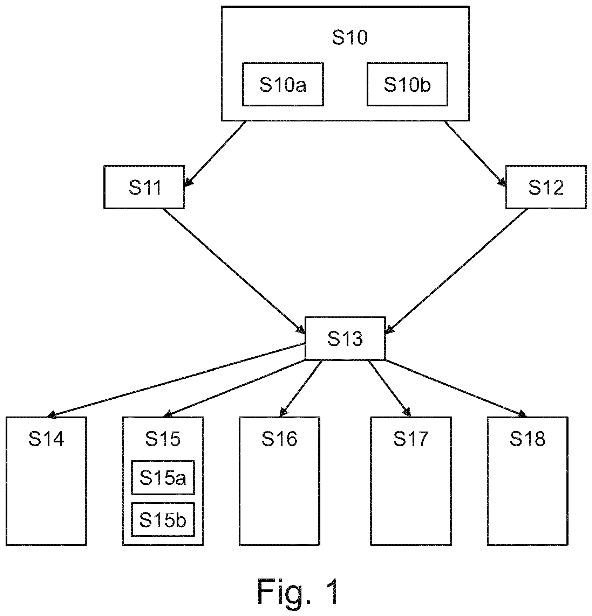

Fig 1 illustrates a method for a medical imaging system according to the present disclosure.

The method comprises, in step S11, acquiring, by means of a video camera mounted on a component of a medical imaging device of the medical imaging system, a sequence of 2D images. The video camera may, in particular, acquire video data and the sequence of 2D images may correspond to a sequence of frames of the video data.

The sequence of images may comprise color images, monochrome images, and/or IR images, for example.

The acquisition of the at least two images may be manually triggered. Alternatively, acquisition of at least one of the images may be automatically triggered. For example, after acquiring a first image, the second image may be acquired in response to the component having moved a predetermined distance or having reached a predetermined position. Alternatively or in addition, acquisition of the first image may optionally be automatically triggered, for example in response to the subject being in a target position.

The method comprises, in step S12, moving the component of the medical imaging device such that at least two images of the sequence of 2D images are acquired at different positions.

The sequence of images may, thus, comprise images captured while moving the component and/or prior to moving the component and/or after moving the component.

The component may be moved in a controlled manner in such a way that the sequence of 2D images comprises at least one image pair acquired at different positions. The movement and the image acquisition may be synchronized.

The moving in step S12 may comprise moving the component along a predetermined path and/or along a path that is tracked. The movement may include vertical, horizontal, oblique, rotational, and/or tilting movements. The component may be moved by means of a drive that is automatically controlled or remote controlled by a user.

Step S12 may be carried out as part of the preparation for the medical imaging, for example when adjusting an imaging geometry of the medical imaging system to a subject size. This often includes vertical movements towards or away from the subject. Step S12 may alternatively or in addition entail movements unrelated to adjusting the imaging geometry. For example, the moving may comprise a shifting of the component specifically for the purpose of obtaining a stereoscopic image pair.

Prior to determining 3D image information in Step S13, if not all images of an acquired sequence of 2D images are to be used for determining the 3D image information, the method may comprise, particularly automatically, selecting the at least two images to be used for determining 3D image information from the acquired sequence of 2D images. For example, selecting the at least two images may be based on a time or number of frames elapsed between the images and/or based on the respective position at which the images are acquired.

The method comprises, in step S13, processing the at least two images to determine 3D image information.

In other words, depth information may be determined, for example in the form one or more depth maps and/or in the form of 3D coordinates. As an example, stereoscopic methods may be employed. Any suitable methods of computer vision may be employed. Machine learning methods may be employed. Such methods may take 2D images or image data derived therefrom as input data and output 3D image information.

Optionally, as part of step S13, a 3D surface of the subject may at least partially be reconstructed from the sequence of 2D images and system parameters describing the movement of the component.

In an example, an entire video sequence obtained from a continuum of camera positions, such as when displacing the component, may be processed for obtaining the 3D image information.

The method may comprise that a position of the component is recorded during acquisition of the sequence of 2D images, particularly during video frame acquisition. The recorded positions may be retrieved and used in step S13 for determining 3D image information. In case the component is moved along a predetermined path, the position of the component may be known and retrieved for use in step S13 for determining 3D image information.

In an optional step S10, a calibration procedure may be performed prior to step S11 of acquiring the sequence of 2D images.

The calibration procedure may, for example, comprise step S10a of determining intrinsic parameters of the video camera that allow mapping pixel coordinates in the 2D images and coordinates of points in the camera coordinate system.

The calibration procedure may, for example, comprise step S10b of determining extrinsic parameters of the video camera that allow mapping into a reference coordinate system of the component on which the video camera is mounted. This, among others, allows for using data representative of the movement of the component, e.g. including position of the component at a given time, including at the times of image acquisition in step S11, to determine 3D image information from the images acquired in step S11.

The calibration procedure may be carried out when the subject is already positioned for medical imaging.

The calibration procedure may comprise using a fixed reference pattern (calibration pattern).

In optional step S14, the 3D image information is used for adjusting collimator setting of a collimator of the medical imaging device. For example, a collimation window may be computed based on the 3D image information and collimation may be automatically adjusted based thereon.

In optional step S15a, the 3D image information is used for computing a detector position of a detector of the medical imaging device. In optional step S15b, the detector position may be adjusted. In particular, steps S15a and S15b may entail height determination and adjustment of the detector height.

In optional step S14, the 3D image information is used for positioning guidance for positioning a subject, such as a patient, relative to the medical imaging system.

In optional step S15, the 3D image information is used for automatically adjusting rotation of the tube head and/or tilt angles of the tube head. For example, this may serve to adjust the Field of View, FOV, of the medical imaging device.

In optional step S16, the 3D image information is used for computing a breath signal of a subject. When a subject breathes, the relative distance of the subject-surface to the video camera will change. Accordingly, breath can be determined based on said distance, which, in turn, can be derived from the 3D image information.

In optional step S17, the 3D image information is used for computing a motion signal of a subject. For example, a motion of the subject will lead to changed 3D coordinates of surface points of the subject, such that the motion of the subject in a given time interval can be computed based on 3D image information for different times of said time interval, or, in other words, based on changes of the 3D image information over said time interval.

In optional step S18, the 3D image information is used for computing biometrics of a subject or of a body part of a subject, such as height, width, volume, weight, circumference. The 3D image information, for example, allow for obtaining information on the surface and/or volume of the portion of the subject being imaged, such as a body part. The determination will be more accurate than estimations without 3D image information.

Optionally, a second camera, e.g. video camera, may be provided and one or more of the above steps may also be carried out using the second camera. This may improve accuracy. Particularly, the second camera may be provided at a different component of the medical imaging device or may be arranged externally to the medical imaging device.

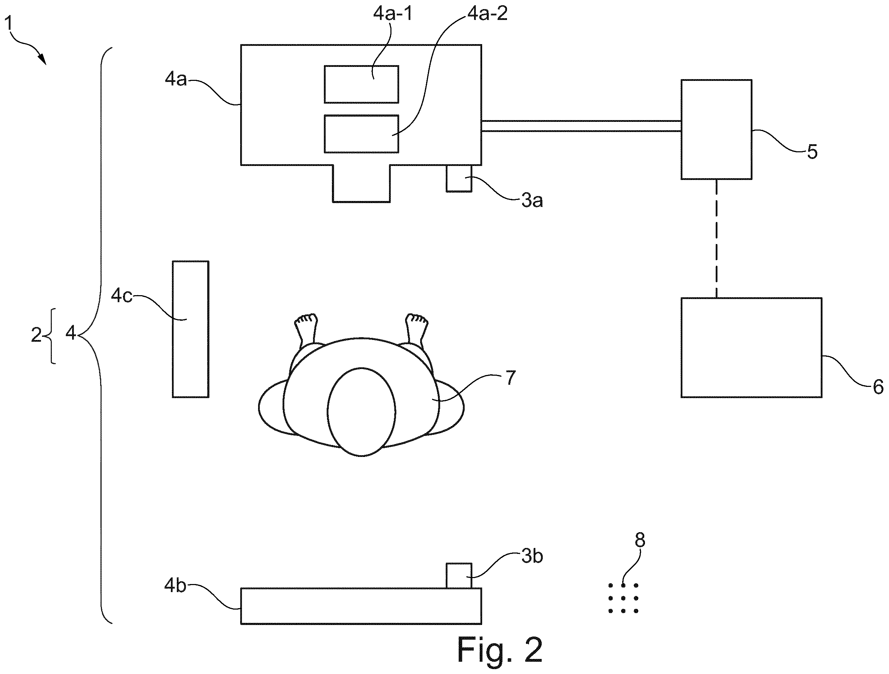

Fig. 2 illustrates a schematic, not-to scale view of a medical imaging system 1 according to the present disclosure.

The medical imaging system 1 comprises a medical imaging device 2 and a video camera 3a. The video camera 3a may be a first video camera and a second video camera 3b may optionally be provided.

The medical imaging system is configured to carry out the method of the present disclosure, particularly as explained in the context of Fig. 1.

The medical imaging device comprises one or more components 4, the components comprising at least one of a tube head 4a, which comprises an X-Ray source 4a-1 and optionally a collimator 4a-2, a detector 4b, and further components 4c of the medical imaging device.

The video camera 3a is mounted on one of the components 4 of the medical imaging device in such a manner that the relative arrangement of the video camera and the component is fixed. In the example illustrated in Fig. 2, the video camera 3a is mounted on the tube head. If the optional second video camera 3b is provided, it may be mounted on a different component than the first video camera 3a. For example, the first video camera 3a may be mounted on the tube head and the second camera 4b, e.g. video camera, may be mounted on the detector as exemplarily shown in Fig. 2. The second camera may also be used for image acquisition for obtaining 2D images and determining 3D image information.

The medical imaging device is configured such that the component is movable, particularly automatically movable, by a drive 5, particularly a motor.

Particularly, the medical imaging device may be configured such that the component is automatically movable along a predetermined path or a path that is tracked. Methods for tracking of components are known in the art.

The medical imaging system may comprise a processing device 6 configured to carry out and/or control the method steps of the present disclosure, such as outlined in the context of Fig. 1. Controlling may relate to any steps that are not directly carried out by the processing device, such as a physical movement for example, and instead may be considered to be controlled by the processing device.

Fig. 2 also illustrates a subject 7 position in the field of view, FOV, of the medical imaging device, for example a patient to undergo X-ray imaging.

Moreover, an optional reference pattern 8 (calibration pattern) is shown in Fig. 2. Such a reference pattern may be depicted in the at least two images of the sequence of 2D images and may be used for determining 3D image information. As an example, a pixel distance between points of the reference pattern between the two images may be indicative of motion between acquisition of the two images.

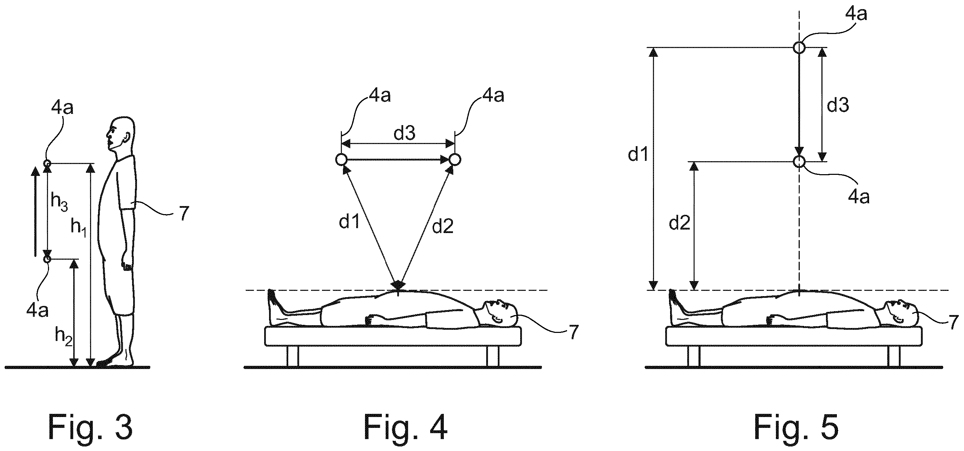

Fig. 3 illustrates an example showing the component, for example the tube head 4a, of the medical imaging system at two exemplary different positions, a first position and a second position, where the at least two images of the sequence of 2D images may be acquired.

In the Figure, h1 and h2 represent heights of the component at the respective first position and second position.

The path along which the component, and accordingly the camera, is moved is illustrated by an arrow.

The distance by which the component has moved is represented by h3.

In this example, the video camera acquires images of the subject in a side view and a vertical movement is shown, e.g. along an upright patient standing in front of the detector.

The camera is mounted on the source, e.g. on the tube head, and faces the subject. The optical axis may be horizontal in this example.

Additional images at additional positions may optionally be acquired and used for obtaining 3D image information. This, in particular, may allow for improving accuracy, particularly in terms of signal to noise ratio.

Fig. 4 illustrates an example showing the component, for example the tube head 4a, of the medical imaging system at two exemplary different positions, a first position and a second position, where the at least two images of the sequence of 2D images may be acquired.

In the Figure, d1 and d2 represent the distance between the component and the subject at the respective first position and second position. In the present example, d1 and d2 are approximately the same, but they may also be different. The path along which the component is moved is illustrated by an arrow. The distance by which the component has moved is represented by d3.

In this example, the video camera acquires images of the subject in a top view and a horizontal movement is shown. Such a movement may result from a sideways movement of the component relative to the subject, e.g. along a straight line, or a rotational movement in a horizontal plane.

The distance d3 may be about 10 % of the distance d1 as one nonlimiting example. Using images acquired at these or similar positions allows for applying stereoscopic techniques known in the art to obtain 3D image information.

Additional images at additional positions may optionally be acquired and used for obtaining 3D image information. This, in particular, may allow for improving accuracy, particularly in terms of signal to noise ratio.

Fig. 5 illustrates another example showing the component, for example the tube head 4a, of the medical imaging device at two exemplary different positions, a first position and a second position, where the at least two images of the sequence of 2D images may be acquired.

In the Figure, d1 and d2 represent the distance between the component and the subject at the respective first position and second position. The path along which the component moved is illustrated by an arrow.

The distance by which the component has moved is represented by d3.

In this example, the video camera acquires images of the subject with an optical axis arranged vertically and a vertical movement is shown. Such a movement may result from moving the component in the course of adjusting a distance of the component relative to the subject, for example, as is the case here a height adjustment of the component. Such adjustments may be made for adjusting medical imaging geometry as part of the medical imaging workflow.

Additional images at additional positions may optionally be acquired and used for obtaining 3D image information. This, in particular, may allow for improving accuracy, particularly in terms of signal to noise ratio.

Figs. 4 and 5 illustrate a horizontal and a vertical movement, respectively. However, the invention is not limited to such movements. For example, oblique movement directions are also conceivable. The movement may incorporate translational movements and/or rotational movements and/or tilting of the component.

Figs. 4 and 5 illustrate a video camera acquiring images in a top view. However, the invention is not limited to top views. For example, the video camera may have a bottom view, for example if mounted on the detector, or a side view or an oblique view.

In the following, more aspects and advantages of the method and system of the present disclosure will be provided.

The method of the present disclosure allows for obtaining depth information in a medical imaging system.

Depth information may be used to automate and simplify the X-ray examinations. Applications include amongst others automated collimation of X-ray beam, automated computation of detector height, positioning guidance of the patient with respect to the X-ray detector, and computation of breathing signal.

The present disclosure provides a method that may, for example, be based on the use of a single video color or monochrome camera. The video camera may be mounted on the X-ray collimator or other component, which can be moved automatically in the vertical and/or horizontal direction. Therefore, frames can be acquired at different vertical or horizontal positions of the video camera with respect to the patient. A depth map can be computed from a pair of such frames using the stereoscopic principle.

The method can be used to automate the workflow of X-ray examinations, such as auto-collimation of an X-ray beam.

The method can be integrated in all medical imaging systems where the video camera can be mounted on a moving system part while providing a suitable view of the patient during examination. For example, this may entail X-ray, for example for a fluoroscopic imaging, and/or C-arm systems.

The method has the benefit of reduced cost, footprint and heat generation, and larger availability. Moreover, it can be retrofitted as software upgrade to the existing installed base of X-ray systems already equipped with a video camera.

The method may make use of the fact that medical imaging systems are often motorized, and the system geometry can be adapted automatically, e.g. detector height (vertical motion) and tube (vertical and horizontal motion).

The method of the present disclosure overcomes the following challenges. 3D cameras may provide depth information. However, 3D camera technology is expensive. Sourcing of industrial 3D cameras is an issue. 3D cameras typically have a large footprint or volume making their integration in the medical imaging device, e.g. the X-ray tube, challenging. 3D cameras can also be associated with significant heat generation due to the use of active IR lights (active stereo, Time of flight systems) and high power consumption. Regular video cameras alone, however, do not provide depth information, and cannot provide accurate estimates for different patient sizes, source-to-image distance, SID, etc.

In the following, an example for the method and system of the present disclosure is provided:
Multiple images taken at different positions with the same video camera are used to compute depth.

The video camera is mounted on the tube head of the X-ray system. In this way, the video camera moves together with the tube head, typically along the vertical and horizontal geometry axes of the X-ray geometry. This movement is typically actioned by a motor which can be controlled remotely or even automatically. In this example, the tube head is the claimed component.

The exact position and orientation of the video camera with respect to the X-ray detector is computed via a calibration procedure (e.g., using state-of-the-art computer vision).

At least two camera images are recorded where the tube head, on which the video camera is mounted, is moved to a different position between each of a pair of image-acquisitions. This displacement may take place when the geometry is adjusted to the patient size, for example. Alternatively, a small displacement (e.g. 10 to 50 mm and/or 10% of the distance to the subject) can be induced on purpose to acquire a stereoscopic image pair.

A stereo principle is applied to compute disparity maps from pairs of images acquired at different X-ray tube positions. This can be done by applying state of the art computer vision algorithms such as cross-correlation or optical flow.

From the disparity map, the depth map and/or the 3D coordinates of each pixel can be computed.

A complete video sequence may be recorded during the tube displacement, with a continuum of camera positions. The position of the X-ray tube is recorded in synchronization with video frame acquisition. All of the images or frames from the video sequence can be combined to compute a single depth map. Thus, depth information with improved accuracy is obtained.

Another detailed example of the method of the present disclosure is provided below:
Mount a video camera on the X-ray tube such that the video camera can image the patient standing, sitting or lying in front of the X-ray detector or at least the relevant target body region.

Calibrate the video camera with respect to the X-ray tube: Determine the intrinsic parameters of the video camera that allow mapping pixel coordinates in images taken by the video camera and (homogenous) coordinates of the physical points in the camera coordinate system. Additionally, determine the extrinsic parameters of the video camera that allow mapping into a reference coordinate system related to the X-ray tube.

Take an image during the patient preparation. Taking the suitable image can be either automatically triggered by analysing a video stream from the video camera to pick the right moment (i.e., when the patient lies on the table in the target final position but yet without additional devices such as X-ray protection attached), or performed manually as part of the set-up process.
Take at least a second image at a different X-ray tube position. This can be done by shifting the X-ray tube by a fixed amount, preferably automatically. Alternatively, this can be achieved by acquiring a series of images at consecutive X-ray tube positions while the X-ray tube is positioned to the correct height and lateral position.

Compute the depth image by calculating, for each pixel, the pixel shift induced by the tube motion between the two images. This is known from stereoscopy, and various algorithms have been proposed to solve this problem. Together with one 2D colour image, the depth image can be presented to the operator for further planning. It can be used as input to compute 3D coordinates. The 3D coordinates may be used by automation algorithms of the medical imaging, such as auto-collimation and positioning guidance. The 3D surface of the patient can also be partially re-constructed from a sequence of camera images and the corresponding system parameters describing the tube motion using structure from motion algorithms.

According to another exemplary embodiment, a computer program product (also referred to as computer program) comprising computer-readable instructions which, when executed by a computer, cause the computer to carry out and/or control the method of the present disclosure, such as outlined above.

The computer program (product) might be stored on a computer unit, which might also be part of an embodiment of the present invention. This computing unit may be adapted to perform or induce a performing of the steps of the method described above. Moreover, it may be adapted to operate the components of the above-described system. The computing unit can be adapted to operate automatically and/or to execute the orders of a user. A computer program (product) may be loaded into a working memory of a data processor. The data processor may thus be equipped to carry out the method of the invention. This exemplary embodiment covers both, a computer program that right from the beginning uses the invention and a computer program that by means of an update turns an existing program into a program that uses the invention. Further on, the computer program (product) might be able to provide all necessary steps to fulfill the procedure of an exemplary embodiment of the method as described above.

According to another exemplary embodiment, computer readable medium having stored thereon computer-readable instructions which, when executed by a computer, cause the computer to carry out and/or control the method of the present disclosure, such as outlined above.

A computer program (product) may be stored and/or distributed on a suitable medium, such as an optical storage medium or a solid-state medium supplied together with, or as part of other hardware, but may also be distributed in other forms, such as via the internet or other wired or wireless telecommunication systems. However, the computer program (product) may also be presented over a network like the World Wide Web and can be downloaded into the working memory of a data processor from such a network.

According to a further exemplary embodiment of the present invention, a medium for making a computer program (product) available for downloading is provided, which computer program (product) is arranged to perform a method according to one of the previously described embodiments of the invention.

In the present disclosure, particularly in the claims, the words "comprising" or "comprises" do not exclude other elements or steps, and the indefinite articles "a" or "an" do not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

### LIST OF REFERENCE SIGNS:

### Steps S10 to S18

Medical imaging system 1
Medical imaging device 2
Video camera 3a
Video camera 3b
Component 4
Tube head 4a
X-Ray source 4a-1
Collimator 4a-2
Detector 4b
Further components 4c
Drive 5
Processing device 6
Subject 7
Reference pattern 8
d1, d2 distance between the component and the subject
d3 distance by which the component has moved
h1, h2 height of the camera
h3 distance by which the component has moved in a height direction

## Claims

1. A computer-implemented method for a medical imaging system (1), the method comprising
acquiring, by means of a video camera (3a, 3b) mounted on a component (4) of a medical imaging device (2) of the medical imaging system, a sequence of 2D images,
moving the component (4) of the medical imaging device (2) such that at least two images of the sequence of 2D images are acquired at different positions, and
processing the at least two images to determine 3D image information.

2. The method of claim 1,
wherein the moving comprises moving the component along a predetermined path and/or along a path that is tracked, and/or
wherein the moving is carried out when adjusting an imaging geometry of the medical imaging system (1) prior to imaging of a subject, e.g., when adjusting the imaging geometry to a subject size, and/or
wherein the moving comprises a displacement by a distance such that the at least two images are a stereoscopic image pair, in particular the stereoscopic image pair being an image pair suitable for a stereoscopic determination of the 3D image information.

3. The method of claim 1 or 2,
wherein, prior to acquiring the sequence of 2D images, a calibration procedure is performed,
wherein the calibration procedure comprises determining intrinsic parameters of the video camera (3a, 3b) that allow mapping pixel coordinates in the 2D images and coordinates of points in a camera coordinate system, and/or
wherein the calibration procedure comprises determining extrinsic parameters of the video camera (3a, 3b) that allow mapping into a reference coordinate system of the component (4).

4. The method of any of the preceding claims,
wherein, prior to acquiring the sequence of 2D images, a/the calibration procedure is performed,
wherein the calibration procedure comprises calibrating the video camera (3a, 3b) with respect to a component (4) of the medical imaging device (2), particularly with respect to the component on which the video camera is mounted and/or another component, and/or
wherein the calibration procedure comprises computing a position and orientation of the video camera (3a, 3b) with respect to a/the component (4), particularly a detector (4b), of the medical imaging system (1), particularly making use of a computer-vision method, and/or
wherein the calibration procedure comprises use of a fixed reference pattern (8).

5. The method of any of the preceding claims,
wherein acquisition of the at least two images is manually triggered and/or automatically triggered, respectively, in particular in response to the component (4) having moved a predetermined distance (d3), and/or
wherein a first image of the at least two images is acquired prior to a second image of the at least two images and wherein acquisition of the first image and optionally the second image is automatically triggered, in particular, wherein the acquisition of the first image is triggered based on the subject (7) being in a target position.

6. The method of any of the preceding claims,
wherein determining the 3D image information comprises retrieving depth information, particularly computing a depth map and/or obtaining 3D coordinates, and/or
wherein determining the 3D image information comprises calculating pixel shift induced by the motion of the component, and/or
wherein determining the 3D image information comprises computing a depth map using a stereoscopic method, in particular, wherein retrieving 3D image information comprises computing a disparity map from the at least two images and computing 3D coordinates and/or a depth map from the disparity map, and/or
wherein determining the 3D image information comprises at least partially reconstructing a 3D surface of the subject from the sequence of 2D images and system parameters describing the movement of the component (4), and/or
wherein the 3D image information and/or a/the depth map are computed using a machine learning model, particularly a deep learning model such as a convolution neural network, particularly by inputting the at least two images into the machine learning model.

7. The method of any of the preceding claims,
wherein determining the 3D image information comprises processing the images of a video sequence to obtain a single depth map or a plurality of depth maps, particularly, wherein the video sequence is obtained from a continuum of camera positions, such as when displacing the component, and/or
wherein a position of the component (4) is recorded during acquisition of the sequence of 2D images, particularly during video frame acquisition.

8. The method of any of the preceding claims,
wherein the component (4) is moved by means of a drive (5), particularly a motor, wherein the drive (5) is automatically controlled and/or remote controlled, and/or
wherein the moving of the component comprises movement in a vertical direction and/or a horizontal direction and/or a rotation of the component and/or a tilt of the component (4).

9. The method of any of the preceding claims,
wherein a single video camera (3a, 3b) is used for acquiring the sequence of 2D images, and/or
wherein the sequence of images comprises color images, monochrome images, and/or IR images.

10. The method of any of the preceding claims,
comprising using the 3D image information for at least one of:
adjusting collimator settings, particularly computing a collimation window for automated collimation of the medical imaging system (1),
computing a detector position, particularly a height, of a detector (4b) of the medical imaging device (2), particularly adjusting height of the detector (4b),
computing distances and/or angles between different body parts of the subject, and adapting the imaging geometry of the medical imaging system accordingly,
positioning guidance for positioning a subject (7) relative to the medical imaging system (1),
automatically adjusting rotation of a tube head (4a) and/or tilt angles of a/the tube head (4a),
computing a breath signal of a subject (7),
computing a motion signal of a subject (7),
computing biometrics of a subject (7) or of a body part of a subject (7), such as height, width, volume, weight, circumference,
computing a body type of a subject, such as child, adult, small-sized, medium-sized, large-sized,
computing the X-ray dose-relevant parameters, such as voltage and current, based on patient biometrics.

11. Medical imaging system (1) comprising a medical imaging device (2) and a video camera (3a, 3b), wherein the medical imaging system (1) is configured to carry out the method of any of the preceding claims.

12. The medical imaging system (1) of claim 11,
wherein the video camera (3a, 3b) is mounted on a component (4) of the medical imaging device (2) in such a manner that the relative arrangement of the video camera (3a, 3b) and the component (4) is fixed, and
wherein the medical imaging device (2) is configured such that the component (4) is movable, particularly automatically movable, by a drive (5), particularly a motor, and/or
wherein the medical imaging device (2) is configured such that the component (4) is automatically movable along a predetermined path.

13. The medical imaging system (1) of claim 12,
wherein the medical imaging device (2) is an X-ray imaging device having a tube head (4a) and a detector (4b), and wherein the component (4) is the tube head (4a) or wherein the component (4) is the detector (4b), and/or
wherein the medical imaging device (2) is an X-ray imaging device having a tube head (4a) and a detector (4b), wherein the video camera (3a, 3b) is a first video camera (3a) and the medical imaging system (1) comprises a second video camera (3b), and wherein the first video camera (3a) is mounted on the tube head (4a) and the second video camera (3b) is mounted on the detector (4b) or on another component of the medical imaging device (2).

14. A computer program product comprising computer-readable instructions which, when executed by a computer, cause the computer to carry out and/or control the method of any of claims 1 to 10.

15. A computer readable medium having stored thereon computer-readable instructions which, when executed by a computer, cause the computer to carry out and/or control the method of any of claims 1 to 10.
